# EUROPÄISCHE PATENTANMELDUNG

(11) **EP 2 472 344 A1**
(43) Veröffentlichungstag der Anmeldung: **04.07.2012**
(21) Anmeldenummer: 10197128.1
(22) Anmeldetag: 28.12.2010
(51) Int. Cl.: G05B 19/4103, B29C 45/76, B29C 45/77

(54) **Steuerungssystem**

(71) Anmelder: SIEMENS AKTIENGESELLSCHAFT, 80333 München (DE)
(72) Erfinder: Grammatke, Kay, Dr., 09232 Hartmannsdorf (DE); Kram, Raimund, 91056 Erlangen (DE)

(57) **Zusammenfassung**

Ein Steuerungssystem (1) umfasst eine übergeordnete Steuereinrichtung (2) und einen untergeordneten Antrieb (3). Die Steuereinrichtung (2) ermittelt in einem Steuerungstakt (tS) in Abhängigkeit von einem Sollwert oder von einer Soll-Ist-Abweichung einer von einer Lage (p) des untergeordneten Antriebs (3) verschiedenen Größe einen Steuerungslagesollwert (p*) und Interpolationsgrößen (IP) und übermittelt hierfür charakteristische Größen (Δp^{*}, IP) an den Antrieb (3). Der Antrieb (3) ermittelt anhand der im Steuerungstakt (tS) übermittelten charakteristischen Größen (Δp^{*}, IP) in einem Antriebstakt (tA), der kürzer als der Steuerungstakt (tS) ist, jeweils einen Antriebslagesollwert und führt im Antriebstakt (tA) eine Lageregelung mit unterlagerter Drehzahlregelung durch. Der Antrieb (3) ermittelt die Antriebslagesollwerte derart, dass die Folge der Antriebslagesollwerte steuerungstaktübergreifend sowohl stetig als auch differenzierbar ist.

## Beschreibung

Die vorliegende Erfindung betrifft ein Steuerungssystem,
- wobei das Steuerungssystem eine übergeordnete Steuereinrichtung und einen untergeordneten Antrieb umfasst,
- wobei die Steuereinrichtung in einem Steuerungstakt einen Steuerungslagesollwert und Interpolationsgrößen ermittelt und hierfür charakteristische Größen an den Antrieb übermittelt,
- wobei der Antrieb anhand der im Steuerungstakt übermittelten charakteristischen Größen in einem Antriebstakt, der kürzer als der Steuerungstakt ist, jeweils einen Antriebslagesollwert ermittelt und im Antriebstakt eine Lageregelung mit unterlagerter Drehzahlregelung durchführt,
- wobei der Antrieb die Antriebslagesollwerte derart ermittelt, dass die Folge der Antriebslagesollwerte steuerungstaktübergreifend sowohl stetig als auch differenzierbar ist.

Die vorliegende Erfindung betrifft weiterhin ein Steuerprogramm für eine Steuereinrichtung eines derartigen Steuerungssystems, wobei das Steuerprogramm Maschinencode umfasst, der von der Steuereinrichtung unmittelbar abarbeitbar ist, und wobei die Abarbeitung des Maschinencodes durch die Steuereinrichtung bewirkt, dass die Steuereinrichtung in einem Steuerungstakt einen Steuerungslagesollwert und Interpolationsgrößen ermittelt und hierfür charakteristische Größen an den Antrieb übermittelt.

Ein derartiges Steuerungssystem und das entsprechende Steuerprogramm sind beispielsweise in der DE 101 04 712 C1 und der korrespondierenden US 6 677 721 B2 beschrieben und auch unter der Bezeichnung DSC-Spline am Markt verbreitet.

Die Lehre des Standes der Technik wird im Rahmen von Bahnführungen für Werkzeugmaschinen, Roboter und dergleichen eingesetzt. Die dort beschriebene Vorgehensweise liefert gute Ergebnisse, da mit ihr im Antrieb eine höhere Dynamik erreichbar ist und weiterhin Möglichkeiten eröffnet werden, die Drehzahl und unter Umständen sogar den Strom oder alternativ das Moment vorzusteuern.

Bei vielen technischen Steuerungsvorgängen wird nicht die Lage geregelt, sondern eine andere technologische Größe. Beispielsweise werden bei Spritzgießmaschinen die Einspritzgeschwindigkeit, der Einspritzdruck in der Einspritzphase und der Einspritzdruck in der Nachdruckphase geregelt. Bei Pressen wird oftmals die Pressenkraft geregelt. Für manche Verfahrbewegungen erfolgt nicht ein lage- sondern ein geschwindigkeitsgeregeltes Verfahren. Auch für derartige Größen ist es von Vorteil, wenn die Regelungen mit hoher Dynamik und mit der Möglichkeit, Vorsteuerungen vorzunehmen, durchgeführt werden.

Die Aufgabe der vorliegenden Erfindung besteht darin, Möglichkeiten zu schaffen, mittels derer bei einem Steuerungssystem, das eine übergeordnete Steuereinrichtung und einen untergeordneten Antrieb umfasst, auf einfache Weise Regelvorgänge mit hoher Dynamik und der Möglichkeit zur Drehzahl- und eventuell sogar Momentvorsteuerung vorgenommen werden können, obwohl die geregelte Größe nicht die Lage des Antriebs ist.

Die Aufgabe wird durch ein Steuerungssystem mit den Merkmalen des Anspruchs 1 gelöst. Vorteilhafte Ausgestaltungen des erfindungsgemäßen Steuerungssystems sind Gegenstand der abhängigen Ansprüche 2 bis 7.

Erfindungsgemäß ist vorgesehen, dass die Steuereinrichtung den Steuerungslagesollwert und die Interpolationsgrößen in Abhängigkeit von einem Sollwert oder von einer Soll-Ist-Abweichung einer von einer Lage des untergeordneten Antriebs verschiedenen Größe ermittelt.

Durch die erfindungsgemäße Vorgehensweise werden also nicht direkt Parameter ermittelt, anhand derer die hochdynamische Regelung und die Ermittlung der Vorsteuergrößen durchgeführt wird. Stattdessen werden anhand des Sollwertes oder der Soll-Ist-Abweichung der von der Lage des untergeordneten Antriebs verschiedenen Größe ein Steuerungslagesollwert und Interpolationsgrößen ermittelt. Dem Antrieb wird sozusagen vorgegaukelt, er solle eine Lageregelung durchführen, obwohl er in Wirklichkeit eine Steuerung oder Regelung auf die andere Größe durchführt. Somit sind ausschließlich in der Steuereinrichtung entsprechende Anpassungen vorzunehmen. Der Antrieb kann im Vergleich zum Stand der Technik, in dem der Antrieb tatsächlich eine Lageregelung durchführt, unverändert bleiben.

Die Größe, anhand deren Sollwert oder Soll-Ist-Abweichung die Steuereinrichtung den Steuerungslagesollwert und die Interpolationsgrößen ermittelt, kann beispielsweise ein Druck oder eine Kraft sein.

Im Falle einer Kraft kann beispielsweise eine Presse gesteuert werden. Im Falle eines Druckes kann beispielsweise der Antrieb den Vorschub einer Schnecke einer Spritzgießmaschine bewirken und der Druck der Einspritzdruck sein, mit dem geschmolzener Kunststoff während der Einspritzphase und/oder während der Nachdruckphase in eine Spritzgießform der Spritzgießmaschine eingedrückt wird.

Mit der Formulierung "während der Einspritzphase und/oder während der Nachdruckphase" ist im Rahmen der Und-Alternative selbstverständlich nicht gemeint, dass die Einspritzphase und die Nachdruckphase gleichzeitig erfolgen können. Die Einspritzphase und die Nachdruckphase sind vielmehr - sowohl im Stand der Technik als auch bei der vorliegenden Erfindung - voneinander verschiedene Phasen des Spritzgießprozesses. Die Formulierung "während der Einspritzphase und/oder während der Nachdruckphase" soll vielmehr die drei Alternativen umfassen,
- dass der Einspritzdruck zwar während der Einspritzphase, nicht aber während der nachfolgenden Nachdruckphase auf erfindungsgemäße Weise geregelt wird,
- dass der Einspritzdruck zwar nicht während der Einspritzphase, wohl aber während der nachfolgenden Nachdruckphase auf erfindungsgemäße Weise geregelt wird und
- dass der Einspritzdruck sowohl zunächst während der Einspritzphase als auch danach während der nachfolgenden Nachdruckphase auf erfindungsgemäße Weise geregelt wird.

Die Größe, anhand deren Sollwert oder Soll-Ist-Abweichung die Steuereinrichtung den Steuerungslagesollwert und die Interpolationsgrößen ermittelt, kann eine von einer Drehzahl des untergeordneten Antriebs verschiedene Größe sein. In diesem Fall ermittelt die Steuereinrichtung im Steuerungstakt anhand des Sollwertes oder der Soll-Ist-Abweichung der Größe vorzugsweise zusätzlich zum Steuerungslagesollwert auch einen Drehzahlsollwert. Alternativ ist es möglich, dass die Größe, anhand der die Steuereinrichtung den Steuerungslagesollwert und die Interpolationsgrößen ermittelt, eine Sollgeschwindigkeit ist, die quasi selbst einer Solldrehzahl entspricht. In beiden Fällen erleichtert der Umstand, dass ein Drehzahlsollwert bekannt ist, die Ermittlung der Interpolationsgrößen erheblich. Insbesondere kann die Steuereinrichtung in diesem Fall den Steuerungslagesollwert durch eine Trapezinterpolation des aktuellen Drehzahlsollwerts sowie des unmittelbar vorhergehenden Drehzahlsollwerts oder durch eine noch höhere Interpolation von Drehzahlsollwerten ermitteln.

In einer bevorzugten Ausgestaltung der vorliegenden Erfindung definieren die von der Steuereinrichtung ermittelten Interpolationsgrößen innerhalb des aktuellen Steuerungstaktes einen kubischen Lagesollwertverlauf und ermittelt der Antrieb die Antriebslagesollwerte entsprechend diesem kubischen Lagesollwertverlauf.

Die Aufgabe wird weiterhin durch ein Steuerprogramm mit den Merkmalen des Anspruchs 8 gelöst. Eine vorteilhafte Ausgestaltung des erfindungsgemäßen Steuerprogramms ist Gegenstand des abhängigen Anspruchs 9.

Erfindungsgemäß ist vorgesehen, dass die Abarbeitung des Maschinencodes durch die Steuereinrichtung bewirkt, dass die Steuereinrichtung den Steuerungslagesollwert und die Interpolationsgrößen in Abhängigkeit von einem Sollwert oder von einer Soll-Ist-Abweichung einer von einer Lage des untergeordneten Antriebs verschiedenen Größe ermittelt.

Die vorteilhaften Ausgestaltungen des Steuerprogramms entsprechen inhaltlich einer oder mehreren der obenstehend erläuterten vorteilhaften Ausgestaltungen des Steuerungssystems.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch ein eine technische Einrichtung steuerndes Steuerungssystem,
- FIG 2: das Steuerungssystem von FIG 1 in detaillierterer Darstellung,
- FIG 3: ein Zeitdiagramm,
- FIG 4: schematisch das Steuerungssystem beim Steuern einer Spritzgießmaschine,
- FIG 5: ein Detail einer Steuereinrichtung,
- FIG 6: eine weitere Steuereinrichtung und
- FIG 7: ein Zeitdiagramm.

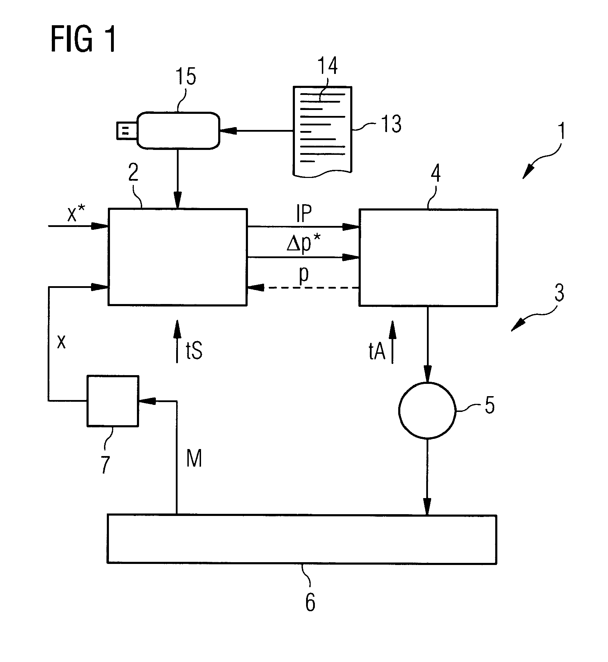

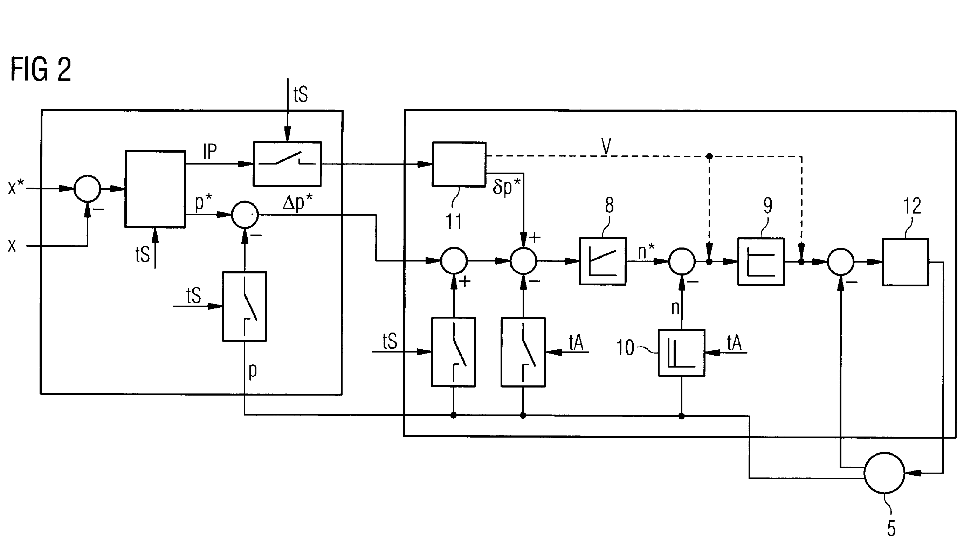

Gemäß den FIG 1 und 2 umfasst ein Steuerungssystem 1 eine Steuereinrichtung 2 - beispielsweise eine numerische Steuerung (CNC) - und einen Antrieb 3. Die Steuereinrichtung 2 ist dem Antrieb 3 übergeordnet, der Antrieb 3 der Steuereinrichtung 2 untergeordnet. Der untergeordnete Antrieb 3 umfasst eine Steuereinheit 4 und mindestens einen über die Steuereinheit 4 gesteuerten Motor 5.

Die Steuereinrichtung 2 arbeitet mit einem Steuerungstakt tS. Der Steuerungstakt tS beträgt beispielsweise 1...8 ms. Der Steuerungstakt tS wird in der Regel von der Steuereinrichtung 2 steuerungsintern generiert. Die Darstellung von FIG 1, in welcher der Steuerungstakt tS der Steuereinrichtung 2 von außen zugeführt wird, dient lediglich der besseren Veranschaulichung.

In jedem Taktzyklus des Steuerungstakts tS ermittelt die Steuereinrichtung 2 einen Lagesollwert p*, nachfolgend als Steuerungslagesollwert p^{*} bezeichnet. Die Steuereinrichtung 2 ermittelt weiterhin in jedem Taktzyklus des Steuerungstakts tS Interpolationsgrößen IP. Die Steuereinrichtung 2 übermittelt in jedem Taktzyklus des Steuerungstaktes tS für den Steuerungslagesollwert p^{*} und die Interpolationsgrößen IP charakteristische Größen Δp^{*}, IP an den Antrieb 3. Insbesondere kann die Steuereinrichtung 2 in jedem Taktzyklus des Steuerungstaktes tS vom Antrieb 3 einen Lageistwert p entgegennehmen, die Differenz von Steuerungslagesollwert p^{*} und Lageistwert p bilden und anstelle des Steuerungslagesollwerts p^{*} selbst nur die Differenz Δp^{*} an den Antrieb 3 übermitteln. Da dem Antrieb 3 der Lageistwert p bekannt ist, kann der Antrieb 3 den Steuerungslagesollwert p^{*} ohne Weiteres rekonstruieren.

Die Steuereinrichtung 2 ermittelt den Steuerungslagesollwert p^{*} und die Interpolationsgrößen IP gemäß den FIG 1 und 2 in Abhängigkeit von einem Sollwert x^{*} und einem Istwert x - genauer: von der Soll-Ist-Abweichung einer Größe. Die Größe kann prinzipiell beliebiger Natur sein. Entscheidend ist, dass es sich nicht um die Lage p des Antriebs 3 handelt. Beispielsweise kann in einer technischen Einrichtung 6, auf die der Antrieb 3 wirkt, eine Messgröße M erfasst und der Steuereinrichtung 2 als Istgröße x zugeführt werden. Falls erforderlich, kann die Messgröße M zuvor in einem Filter 7 gefiltert werden. Das Filter 7 kann ggf. Bestandteil der Steuereinrichtung 2 sein.

Der Antrieb 3 nimmt im Steuerungstakt tS die von der Steuereinrichtung 2 übermittelten charakteristischen Größen Δp^{*}, IP entgegen. Der Antrieb 3 ermittelt in einem Antriebstakt tA jeweils einen Antriebslagesollwert und führt im Antriebstakt tA eine Lageregelung mit unterlagerter Drehzahlregelung durch. Optional kann der Drehzahlregelung zusätzlich eine Strom- oder Momentregelung unterlagert sein. Der Antrieb 3 ermittelt den Antriebslagesollwert anhand der übermittelten charakteristischen Größen Δp^{*}, IP, also im Ergebnis anhand des Steuerungslagesollwerts p* und der Interpolationsgrößen IP.

Der Antriebstakt tA ist kürzer als der Steuerungstakt tS, in der Regel mindestens viermal so kurz, oftmals achtmal bis zweiunddreißigmal so kurz. Wenn - rein beispielhaft - der Steuerungstakt tS 2 ms beträgt, der Steuerungslagesollwert p^{*} und die Interpolationsgrößen IP also alle 2 ms an den Antrieb 3 übermittelt werden, ist der Antriebstakt tA in der Regel maximal 500 µs, oftmals 250 µs, 125 µs oder 62,5 µs.

Analog zum Steuerungstakt tS wird auch der Antriebstakt tA in der Regel vom Antrieb 3 antriebsintern generiert. Die Darstellung von FIG 1 dient lediglich der besseren Veranschaulichung.

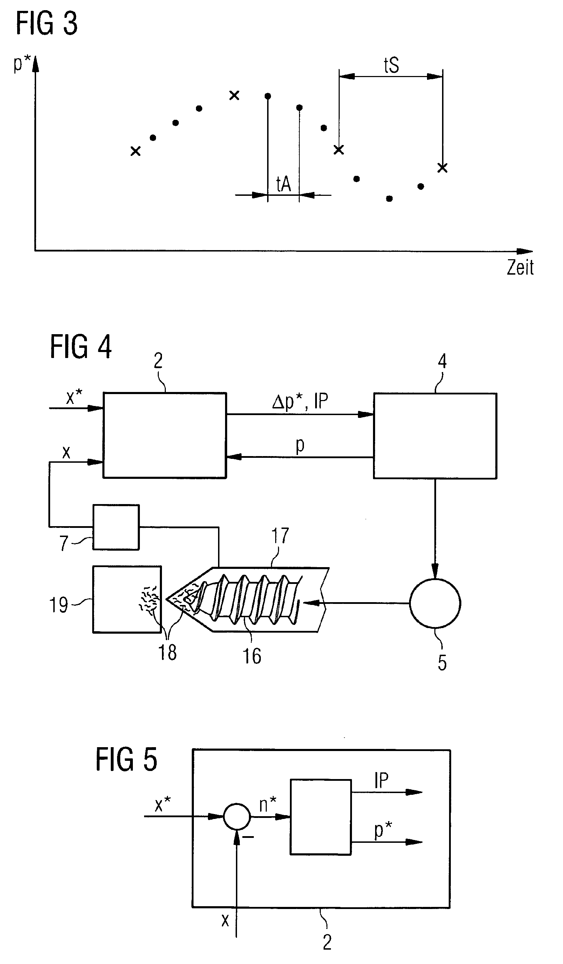

Zum Durchführen der Lageregelung mit unterlagerter Drehzahlregelung implementiert der Antrieb 3 gemäß FIG 2 einen Lageregler 8 und einen Drehzahlregler 9. Mittels eines Differenziergliedes 10 kann der Antrieb 3 beispielsweise einen Drehzahlistwert n generieren. In einer Auswerteeinrichtung 11 ermittelt der Antrieb 3 anhand der Interpolationsgrößen IP für den jeweiligen Antriebstakt tA jeweils einen Lagezusatzsollwert δp^{*}. Die Summe von Steuerungslagesollwert p^{*} (der nur mit dem Steuerungstakt tS aktualisiert wird) und dem Lagezusatzsollwert δp^{*} (der in jedem Antriebstakt tA neu ermittelt wird) entspricht dem Antriebslagesollwert für den jeweiligen Antriebstakt tA. Die Ermittlung der Lagezusatzsollwerte δp* durch die Auswerteeinrichtung 11 ist derart, dass - siehe FIG 3 - die Folge der Antriebslagesollwerte stetig und differenzierbar - vorzugsweise sogar stetig differenzierbar - ist, und zwar nicht nur innerhalb eines Steuerungstaktes tS, sondern auch steuerungstaktübergreifend.

Falls der Antrieb 3 auch eine Strom- oder Momentregelung durchführt, ist dem Drehzahlregler 9 weiterhin ein entsprechender Regler 12 (also ein Strom- oder Momentregler) unterlagert.

Gegebenenfalls können, wie in FIG 2 gestrichelt angedeutet, mittels der Auswerteeinrichtung 11 weiterhin Vorsteuergrößen V ermittelt werden und an geeigneter Stelle der aus Lageregler 8, Drehzahlregler 9 und eventuell Strom- oder Lageregler 12 bestehenden Reglerstruktur des Antriebs 3 zugeführt werden.

Die entsprechende Betriebsweise des Antriebs 3 ist als solche bekannt, siehe beispielsweise die bereits genannte DE 101 04 712 C1. Bei der DE 101 04 712 C1 wird die Steuereinrichtung 3 jedoch lagegeregelt betrieben. Bei der DE 101 04 712 C1 wird also anhand einer abzufahrenden Bahnkurve von der Steuereinrichtung 3 im Steuerungstakt tS jeweils ein neuer Lagesollwert p^{*} und ein entsprechender Drehzahlsollwert n^{*} ermittelt. Bei der Ausgestaltung gemäß den FIG 1 und 2 hingegen erfolgt die Ermittlung des Steuerungslagesollwerts p^{*} und der Interpolationsgrößen IP anhand der Soll-Ist-Abweichung der von der Lage p des Antriebs 3 verschiedenen Größe.

Die Steuereinrichtung 2 ist in der Regel als softwareprogrammierbare Einrichtung ausgebildet. Die Wirkungsweise der Steuereinrichtung 2 ist daher durch ein entsprechendes Steuerprogramm 13 bestimmt. Das Steuerprogramm 13 umfasst gemäß FIG 1 Maschinencode 14. Der Maschinencode 14 ist von der Steuereinrichtung 2 unmittelbar abarbeitbar. Die Abarbeitung des Maschinencodes 14 durch die Steuereinrichtung 2 bewirkt, dass die Steuereinrichtung 2 die obenstehend erläuterte Vorgehensweise ausführt.

Das Steuerprogramm 13 kann der Steuereinrichtung 2 auf beliebige Weise zugeführt werden. Beispielsweise kann das Steuerprogramm 13 auf einem Datenträger 15 in maschinenlesbarer Form gespeichert werden und der Steuereinrichtung 2 über den Datenträger 15 zugeführt werden. Die Darstellung in FIG 1, in welcher der Datenträger 15 als USB-Memorystick dargestellt ist, ist jedoch rein beispielhaft.

Es sind verschiedene vorteilhafte Ausgestaltungen der Steuereinrichtung 2 möglich. Auch diese Ausgestaltungen werden ggf. durch die Abarbeitung des Maschinencodes 14 des Steuerprogramms 13 durch die Steuereinrichtung 2 bewirkt.

So kann beispielsweise gemäß FIG 4 die Größe, anhand deren Soll-Ist-Abweichung die Steuereinrichtung 2 den Steuerungslagesollwert p* und die Interpolationsgrößen IP ermittelt, ein Druck oder - nahezu äquivalent - eine Kraft sein. Die Ansteuerung des Antriebs 3 muss in diesem Fall selbstverständlich Auswirkungen auf den gemessenen Druck bzw. die gemessene Kraft haben. Insbesondere kann der Antrieb 3 gemäß FIG 4 den Vorschub einer Schnecke 16 einer Spritzgießmaschine 17 bewirken. Der erfasste Druck ist in diesem Fall der Einspritzdruck, mit dem geschmolzener Kunststoff 18 in eine Spritzgießform 19 der Spritzgießmaschine 17 eingedrückt wird.

Es ist möglich, dass die obenstehend beschriebene Ermittlung von Steuerungslagesollwert p^{*} und Interpolationsgrößen IP während der Einspritzphase der Spritzgießmaschine 17 erfolgt. Alternativ oder zusätzlich ist es möglich, dass die entsprechende Ermittlung während der Nachdruckphase der Spritzgießmaschine erfolgt. Der Solldruck, auf den geregelt wird, kann zeitabhängig sein. Auch kann die Ermittlungsvorschrift, anhand derer die Steuereinrichtung 2 aus der Soll-Ist-Abweichung den Steuerungslagesollwert p^{*} und die Interpolationsgrößen IP ermittelt, in der Nachdruckphase eine andere sein als in der Einspritzphase.

Wenn die Größe, anhand deren Soll-Ist-Abweichung die Steuereinrichtung 2 den Steuerungslagesollwert p^{*} und die Interpolationsgrößen IP ermittelt, ein Druck (wie in FIG 4) oder eine andere Größe ist, die sowohl von der Lage p als auch von der Drehzahl n (bzw. der Geschwindigkeit) des Antriebs 3 verschieden ist, ermittelt die Steuereinrichtung 2 gemäß FIG 5 vorzugsweise anhand der Soll-Ist-Abweichung der genannten Größe zusätzlich zum Steuerungslagesollwert p^{*} auch einen Drehzahlsollwert n^{*}. Beispielsweise kann die Steuereinrichtung 2 gemäß der Darstellung von FIG 5 zunächst den Drehzahlsollwert n* ermitteln und sodann unter Verwendung des soeben ermittelten Drehzahlsollwertes n^{*} und vorheriger Drehzahlsollwerte n^{*} den aktuellen Steuerungslagesollwert p^{*} und die aktuellen Interpolationsgrößen IP ermitteln. Die Steuereinrichtung 2 kann den Steuerungslagesollwert p^{*} gemäß FIG 5 insbesondere durch eine Trapezinterpolation des aktuellen und des unmittelbar vorhergehenden Drehzahlsollwerts n^{*} ermitteln. Alternativ kann die Steuereinrichtung 2 den aktuellen Steuerungslagesollwert p^{*} durch eine noch höhere Interpolation von Drehzahlsollwerten n^{*} ermitteln. Alternativ kann zur Interpolation auch ein anderer Wert herangezogen werden, anhand dessen - direkt oder indirekt - der Steuerungslagesollwert p^{*} bestimmt wird, also insbesondere der Sollwert oder die Soll-Ist-Abweichung der von der Lage p des Antriebs verschiedenen Größe oder eine daraus abgeleitete Größe.

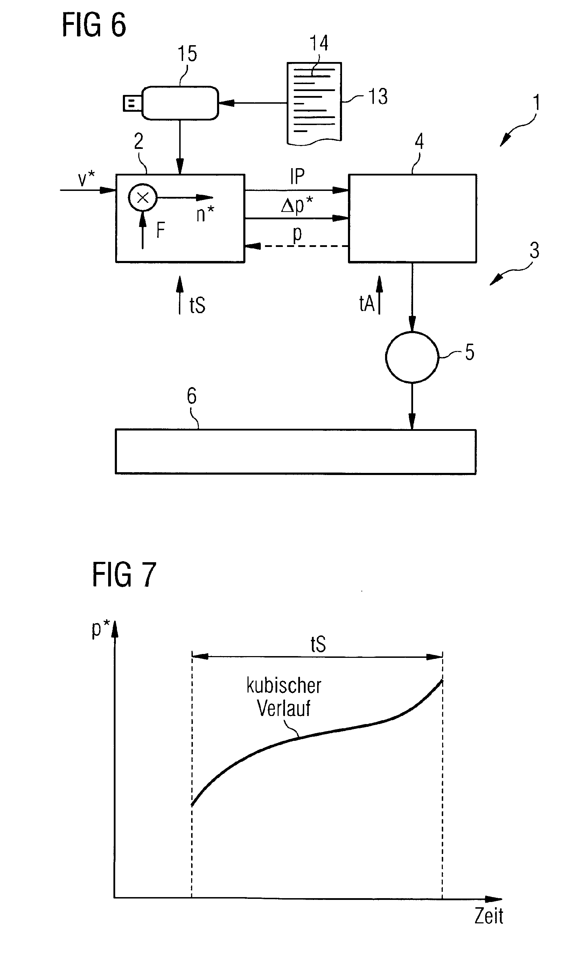

Alternativ kann die Steuereinrichtung 2 den Steuerungslagesollwert p^{*} und die Interpolationsgrößen IP anhand des Sollwertes einer von der Lage p des untergeordneten Antriebs 3 verschiedenen Größe ermitteln, insbesondere gemäß FIG 6 anhand einer Sollgeschwindigkeit v^{*}. FIG 6 entspricht mit Ausnahme des Umstands, dass die Steuereinrichtung 2 den Steuerungslagesollwert p^{*} anhand der Sollgeschwindigkeit v^{*} ermittelt, der Darstellung von FIG 1. Bezüglich der weiteren Ausgestaltung sind daher die obigen Ausführungen zu den FIG 1, 2 und 3 analog anwendbar. Die Ermittlung der Solldrehzahl n^{*} gemäß FIG 5 kann jedoch sehr einfach gestaltet werden, da die Sollgeschwindigkeit v* (bis auf einen konstanten Umrechnungsfaktor F) direkt mit der Solldrehzahl n^{*} korrespondiert.

Wie bereits beschrieben, definieren die Antriebslagesollwerte einen Sollwertverlauf, der steuerungstaktübergreifend stetig und differenzierbar ist. Dementsprechend besteht eine Minimalanforderung an die Interpolationsgrößen IP darin, dass sie innerhalb des aktuellen Steuerungstaktes tS, wie in FIG 7 dargestellt, einen kubischen Lagesollwertverlauf definieren. Der Antrieb 3 ermittelt die Antriebslagesollwerte in diesem Fall entsprechend dem kubischen Lagesollwertverlauf. Die entsprechende Vorgehensweise ist als solche aus der DE 101 04 712 C1 bekannt.

Die vorliegende Erfindung weist viele Vorteile auf. Insbesondere ist auf einfache Weise eine hochdynamische Regelung für eine beliebige Größe realisierbar, ohne den Antrieb 3 und die Schnittstelle zwischen Steuereinrichtung 2 und Antrieb 3 modifizieren zu müssen. Nur die Steuereinrichtung 2 selbst muss entsprechend umprogrammiert werden.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuerungssystem,
- wobei das Steuerungssystem eine übergeordnete Steuereinrichtung (2) und einen untergeordneten Antrieb (3) umfasst,
- wobei die Steuereinrichtung (2) in einem Steuerungstakt (tS) in Abhängigkeit von einem Sollwert oder von einer Soll-Ist-Abweichung einer von einer Lage (p) des untergeordneten Antriebs (3) verschiedenen Größe einen Steuerungslagesollwert (p^{*}) und Interpolationsgrößen (IP) ermittelt und hierfür charakteristische Größen (Δp^{*}, IP) an den Antrieb (3) übermittelt,
- wobei der Antrieb (3) anhand der im Steuerungstakt (tS) übermittelten charakteristischen Größen (Δp^{*}, IP) in einem Antriebstakt (tA), der kürzer als der Steuerungstakt (tS) ist, jeweils einen Antriebslagesollwert ermittelt und im Antriebstakt (tA) eine Lageregelung mit unterlagerter Drehzahlregelung durchführt,
- wobei der Antrieb (3) die Antriebslagesollwerte derart ermittelt, dass die Folge der Antriebslagesollwerte steuerungstaktübergreifend sowohl stetig als auch differenzierbar ist.

2. Steuerungssystem nach Anspruch 1, **dadurch gekennzeichnet, dass** die Größe, anhand deren Sollwert oder Soll-Ist-Abweichung die Steuereinrichtung (2) den Steuerungslagesollwert (p^{*}) und die Interpolationsgrößen (IP) ermittelt, ein Druck oder eine Kraft ist.

3. Steuerungssystem nach Anspruch 2, **dadurch gekennzeichnet, dass** der Antrieb (3) den Vorschub einer Schnecke (16) einer Spritzgießmaschine (17) bewirkt und dass der Druck der Einspritzdruck ist, mit dem geschmolzener Kunststoff (18) während der Einspritzphase und/oder während der Nachdruckphase in eine Spritzgießform (19) der Spritzgießmaschine (17) eingedrückt wird.

4. Steuerungssystem nach Anspruch 1, 2 oder 3, **dadurch gekennzeichnet , dass** die Größe, anhand deren Sollwert oder Soll-Ist-Abweichung die Steuereinrichtung (2) den Steuerungslagesollwert (p*) und die Interpolationsgrößen (IP) ermittelt, eine von einer Drehzahl (n) des untergeordneten Antriebs (3) verschiedene Größe ist und dass die Steuereinrichtung (2) im Steuerungstakt (tS) anhand des Sollwertes oder der Soll-Ist-Abweichung der Größe zusätzlich zum Steuerungslagesollwert (p^{*}) auch einen Drehzahlsollwert (n*) ermittelt.

5. Steuerungssystem nach Anspruch 4, **dadurch gekennzeichnet, dass** die Steuereinrichtung (2) den Steuerungslagesollwert (p^{*}) durch eine Trapezinterpolation des aktuellen Drehzahlsollwerts (n^{*}) sowie des unmittelbar vorhergehenden Drehzahlsollwerts (n*) oder durch eine noch höhere Interpolation von Drehzahlsollwerten (n^{*}) ermittelt.

6. Steuerungssystem nach Anspruch 1, **dadurch gekennzeichnet, dass** der Sollwert eine Sollgeschwindigkeit (v^{*}) ist, dass die Steuereinrichtung (2) die Sollgeschwindigkeit (v^{*}) in eine Solldrehzahl (n^{*}) umrechnet und dass die Steuereinrichtung (2) den Steuerungslagesollwert (p^{*}) durch eine Trapezinterpolation des aktuellen Drehzahlsollwerts (n^{*}) sowie des unmittelbar vorhergehenden Drehzahlsollwerts (n^{*}) oder durch eine noch höhere Interpolation von Drehzahlsollwerten (n^{*}) ermittelt.

7. Steuerungssystem nach einem der obigen Ansprüche, **dadurch gekennzeichnet, dass** die von der Steuereinrichtung (2) ermittelten Interpolationsgrößen (IP) innerhalb des aktuellen Steuerungstaktes (tS) einen kubischen Lagesollwertverlauf definieren und dass der Antrieb (3) die Antriebslagesollwerte entsprechend diesem kubischen Lagesollwertverlauf ermittelt.

8. Steuerprogramm für eine Steuereinrichtung (2) eines Steuerungssystems (1) nach einem der obigen Ansprüche, wobei das Steuerprogramm Maschinencode (14) umfasst, der von der Steuereinrichtung (2) unmittelbar abarbeitbar ist, und wobei die Abarbeitung des Maschinencodes (14) durch die Steuereinrichtung (2) bewirkt, dass die Steuereinrichtung (2) in einem Steuerungstakt (tS) in Abhängigkeit von einem Sollwert oder von einer Soll-Ist-Abweichung einer von einer Lage (p) eines der Steuereinrichtung (2) untergeordneten Antriebs (3) verschiedenen Größe einen Steuerungslagesollwert (p^{*}) und Interpolationsgrößen (IP) ermittelt und hierfür charakteristische Größen (Δp^{*}, IP) an den Antrieb (3) übermittelt.

9. Steuerprogramm nach Anspruch 8, **dadurch gekennzeichnet, dass** die Abarbeitung des Maschinencodes (14) durch die Steuereinrichtung (2) bewirkt, dass die Steuereinrichtung (2) entsprechend einem der Ansprüche 2 bis 7 ausgebildet wird.
